# EUROPÄISCHE PATENTANMELDUNG

(11) **EP 1 441 203 A2**
(43) Veröffentlichungstag der Anmeldung: **28.07.2004**
(21) Anmeldenummer: 03028661.1
(22) Anmeldetag: 16.12.2003
(51) Int. Cl.: G01D 1/12

(54) **Verfahren und Vorrichtung zur Datenerfassung**

(30) Priorität: 20.12.2002 DE 10260176
(71) Anmelder: DaimlerChrysler AG, 70567 Stuttgart (DE)
(72) Erfinder: Hornung, Hans-Georg, 86875 Waal (DE)

(57) **Zusammenfassung**

Eine Vorrichtung zum Erfassen des Maximums (Minimums) unter einer Mehrzahl von Messwerten, mit einer Mehrzahl von Messstellen (1) zum Erfassen der Messwerte und einer Datenleitung (3) zum Übertragen von Datenwerten zwischen den Messstellen (1), wobei wenigstens eine der Messstellen über einen Komparator (13-15) zum Vergleichen eines auf der Datenleitung empfangenen Datenwerts mit dem eigenen Messwert verfügt und ausgelegt ist, den eigenen Messwert nur dann auf der Datenleitung zu senden, wenn er nicht kleiner als der Datenwert ist, ist dadurch gekennzeichnet, dass die Datenleitung (3) eine serielle Leitung zur Übertragung des Datenwerts in Form von aufeinanderfolgenden Bits abnehmender Signifikanz ist, dass der Komparator (13-15) ein serieller Komparator ist, der die empfangenen Bits des Datenwerts mit den gleich signifikanten Bits des eigenen Messwerts vergleicht, und dass die Messstelle (1) ausgelegt ist, jedes als größer als das entsprechende empfangene Bit erkannte Bit des eigenen Messwerts zu senden, bis ein Vergleich ergibt, dass das Bit des eigenen Messwerts kleiner als das des empfangenen Datenwerts ist, und dann das Senden des eigenen Datenwerts einzustellen.

## Beschreibung

Die vorliegende Erfindung betrifft ein Verfahren und eine Vorrichtung zur Datenerfassung, genauer gesagt zur Erfassung des Minimums oder des Maximums einer Mehrzahl von an einer Mehrzahl von Messstellen vorliegenden Messwerten.

Ein herkömmliches Verfahren zum Erzeugen eines solchen Maximums oder Minimums ist, die über einen Bus oder dergleichen mit einer Steuereinheit wie etwa einem Mikroprozessor verbundenen Messstellen der Reihe nach zu adressieren, um sie zu veranlassen, ihren Messwert an die Steuereinheit auszugeben, und anschließend an der Steuereinheit die Ermittlung des Maximums oder Minimums unter den Messwerten vorzunehmen. Ein solches Verfahren ist technisch aufwändig, da jede einzelne Messstelle über eine Schnittstelle verfügen muss, die in der Lage ist, eine Adressierung der betreffenden Messstelle durch die Steuereinheit zu erkennen, und sie führt zu einem beträchtlichen Datenverkehr auf dem Bus, auf dem die Anforderungen an die Messstellen, einen Messwert zu liefern, und deren Antworten sukzessive übertragen werden müssen. Eine besonders hohe Belastung ergibt sich, wenn ein paketorientierter Bus verwendet werden muss, so etwa, weil neben den Messstellen auch Dateneinheiten angebunden werden müssen, die große Datenmengen in kurzer Zeit senden oder empfangen.

Aus WO 00/68700 sind ein Verfahren und eine Vorrichtung zum Ableiten eines Maximums oder eines Minimums aus an einer Mehrzahl von Messstellen erzeugten Messwerten bekannt, bei denen die Messstellen nicht parallel an einem Bus liegen und von einer Steuereinheit adressiert werden, sondern entlang einer Datenleitung in Reihe geschaltet sind, so dass jede Messstelle Daten jeweils nur von einem ihr auf der Datenleitung vorgelagerten Vorgänger empfangen, mit einem eigenen Messwert vergleichen und den jeweils größeren bzw. kleineren Wert an einen Nachfolger weitergeben kann. Bei einer solchen Anordnung entfällt die Notwendigkeit, jede Messstelle einzeln zu adressieren, so dass die einzelnen Messstellen auch keinen Adressdecoder benötigen und dadurch vereinfacht werden können. Die Zeitspanne, die zur Gewinnung eines Maximums bzw. Minimums erforderlich ist, ist allerdings recht lang, da die untereinander seriell verbundenen Messstellen jeweils einen Datenwert vollständig von ihrem Vorgänger empfangen haben müssen, bevor sie den Vergleich mit dem eigenen Messwert durchführen und den unter den beiden Werten ausgewählten Wert weitergeben.

Es wäre zwar möglich, diese Verzögerungen zu verringern, indem eine parallele Übertragung der Datenwerte zwischen benachbarten Messstellen vorgesehen wird, doch eine solche Lösung ist aufwändig und kostspielig, insbesondere wenn die Messstellen in einer Umgebung eingesetzt werden, in der elektromagnetische Störungen häufig sind und deshalb eine Abschirmung der Datenleitung erforderlich ist.

Eine Aufgabe der vorliegenden Erfindung ist, ein Verfahren zum Erfassen des Maximums bzw. des Minimums unter an einer Mehrzahl von Messstellen erfassten Messwerten anzugeben, die eine schnelle Erfassung ermöglichen und die insbesondere keinen Adressdecoder an den einzelnen Messstellen erfordern.

Die Aufgabe wird verfahrensmäßig dadurch gelöst, dass eine Messstelle, die einen Datenwert auf der Datenleitung seriell empfängt, mit dem eigenen Messwert vergleicht und den eigenen Messwert nur dann auf der Datenleitung seriell sendet, wenn er im Falle der Erfassung des Maximums nicht kleiner, im Falle der Erfassung des Minimums nicht größer als der Datenwert ist, die Bits des Datenwertes in der Reihenfolge abnehmender Signifikanz empfängt, die empfangenen Bits des Datenwertes mit den gleich signifikanten Bits des eigenen Messwertes wenigstens so lange vergleicht und jedes als größer (bei Erfassung des Maximums) bzw. kleiner (bei Erfassung des Minimums) als das entsprechende empfangene Bit erkannte Bit des eigenen Messwertes sendet, bis ein Vergleich ergibt, dass das Bit des eigenen Messwertes kleiner (bei Erfassung des Maximums) bzw. größer (bei Erfassung des Minimums) als das des empfangenen Datenwertes ist, und dann das Senden des eigenen Datenwertes einstellt.

Bei einer ersten Ausgestaltung des Verfahrens ist vorgesehen, dass jede Messstelle von jeder anderen Messstelle empfängt und an jede andere Messstelle sendet. Bei dieser Ausgestaltung kann eine Messstelle, die das Senden des eigenen Datenwertes einstellt, das Senden von Bits völlig einstellen, da in diesem Fall eine andere Messstelle an der Datenleitung vorhanden sein muss, deren Messwert extremer, d. h. näher am gesuchten Maximum (oder Minimum) ist und die infolgedessen das Senden fortsetzt.

Einer zweiten Ausgestaltung des Verfahrens zufolge empfängt jede Messstelle von genau einem Vorgänger und sendet an genau einen Nachfolger. Bei dieser Ausgestaltung muss eine Messstelle, die das Senden des eigenen Datenwertes einstellt, in der Folge die Bits des als extremer erkannten Datenwertes, die sie von ihrem Vorgänger empfängt, an den Nachfolger weiterleiten, um zu gewährleisten, dass dieser einen vollständigen Datenwert mit der erforderlichen Bitzahl empfängt.

Die Aufgabe wird ferner durch eine Vorrichtung zum Erfassen des Maximums (bzw. Minimums) unter einer Mehrzahl von Messwerten gelöst, die eine Mehrzahl von Messstellen zum Erfassen der Messwerte und eine Datenleitung zum Übertragen von Datenwerten zwischen den Messstellen aufweist, wobei wenigstens eine der Messstellen über einen Komparator zum Vergleichen eines auf der Datenleitung empfangenen Datenwertes mit dem eigenen Messwert verfügt und ausgelegt ist, den eigenen Messwert nur dann auf der Datenleitung zu senden, wenn er nicht kleiner (bzw. größer) als der Datenwert ist, die dadurch gekennzeichnet ist, dass die Datenleitung eine serielle Leitung zur Übertragung des Datenwertes in Form von aufeinanderfolgenden Bits abnehmender Signifikanz ist, dass der Komparator ein serieller Komparator ist, der die empfangenen Bits des Datenwertes mit den gleich signifikanten Bits des eigenen Messwertes vergleicht, und dass die Messstelle ausgelegt ist, jedes als größer (bzw. kleiner) als das entsprechende empfangene Bit erkannte Bit des eigenen Messwertes zu senden, bis ein Vergleich ergibt, dass das Bit des eigenen Messwertes kleiner als das des empfangenen Datenwertes ist, und dann das Senden des eigenen Datenwertes einzustellen.

Eine der ersten Ausgestaltung des Verfahrens entsprechende erste Ausgestaltung der Vorrichtung weist eine signaltechnisch durchgehende Datenleitung auf, die jede Messstelle mit jeder anderen Messstelle verbindet. Diese Datenleitung weist vorteilhafterweise einen passiven Pegel, der sich einstellt, wenn alle Messstellen einen passiven Bitwert senden, und einen aktiven Pegel auf, der sich einstellt, wenn auch nur eine der Messstellen einen aktiven Bitwert sendet. Bei Ermittlung des Maximums entspricht der passive Pegel einem Bit mit Wert "0", und der aktive Pegel entspricht einem Bit mit Wert "1", bei Ermittlung des Minimums ist die Entsprechung vertauscht.

Bei einer der zweiten Ausgestaltung des Verfahrens entsprechenden Ausgestaltung der Vorrichtung umfasst die Datenleitung eine Mehrzahl von signaltechnisch getrennten Abschnitten, die jeweils eine Messstelle mit einem Vorgänger oder mit einem Nachfolger verbinden. Es gibt eine erste Messstelle, die als Vorgänger eine Steuereinheit hat, die Vorgänger aller anderen Messstellen sind wiederum Messstellen. Genauso ist die Steuereinheit Nachfolger einer letzten Messstelle, und die Nachfolger aller anderen Messstellen sind wiederum Messstellen.

Zweckmäßigerweise sind die Messstellen auch durch eine Taktleitung verbunden. Bei der ersten Ausgestaltung der Vorrichtung ist es zweckmäßig, dass die Taktleitung wie die Datenleitung einen aktiven und einen passiven Pegel aufweist, und dass jede Messstelle eingerichtet ist, von der Ausgabe eines aktiven Pegels auf der Taktleitung zur Ausgabe eines passiven Pegels umzuschalten, wenn ein von der Messstelle auf der Datenleitung zu sendendes Bit stabilisiert ist. Wenn jede Messstelle durch Ausgabe des passiven Pegels anzeigt, dass sie ein gültiges Datenbit ausgibt, so kann eine Steuereinheit am Erscheinen des passiven Pegels auf der Taktleitung erkennen, dass ein gültiges Datenbit auf der Datenleitung vorhanden ist und übernommen werden kann. Die einzelne Taktperiode dauert daher nicht länger als unbedingt erforderlich, so dass eine sehr hohe Geschwindigkeit bei der Ermittlung des Extremums erreicht wird.

Bei der zweiten Ausgestaltung der Vorrichtung ist die Taktleitung - wiederum in ähnlicher Weise wie die Datenleitung - in eine Mehrzahl von signaltechnisch getrennten Abschnitten unterteilt, die jeweils eine Messstelle mit einem Vorgänger oder mit einem Nachfolger verbinden. Vorzugsweise verläuft ein Abschnitt der Taktleitung jeweils zwischen zwei Dateneinheiten, die auch durch einen Abschnitt der Datenleitung verbunden sind, und das von einem Sender jeder Dateneinheit gesendete Taktsignal hat eine Verzögerung von einer halben Taktperiode gegenüber dem vom Empfänger der gleichen Dateneinheit empfangenen Taktsignal. Mit dieser Maßnahme lässt sich die Dauer der Erfassung des abgeleiteten Datenwertes nochmals verringern.

Da die an den einzelnen Dateneinheiten durchzuführenden Operationen erfindungsgemäß im wesentlichen einfache Einzelbit-Operationen sind, eignet sich die Dateneinheiten gemäß der Erfindung besonders zur Realisierung in einem oder mehreren ASICs.

Weitere Merkmale und Vorteile der Erfindung ergeben sich aus der nachfolgenden Beschreibung von Ausführungsbeispielen unter Bezugnahme auf die beigefügten Figuren. Dabei zeigen:
- Fig. 1: ein Blockdiagramm einer ersten Ausgestaltung der erfindungsgemäßen Vorrichtung zur Maximum- oder Minimumerfassung;
- Fig. 2: ein Blockdiagramm eines Brennstoffzellenstapels mit einer daran angeschlossenen Erfassungsvorrichtung gemäß der Erfindung zur Erfassung des Minimums oder Maximums der Klemmenspannungen der einzelnen Brennstoffzellen;
- Fig. 3: ein Flussdiagramm eines Verfahrens zum Erfassen des Maximums der Klemmenspannungen der Brennstoffzellen; und
- Fig. 4: den zeitlichen Verlauf von Takt- und Datensignalen in der Vorrichtung aus Fig. 2.

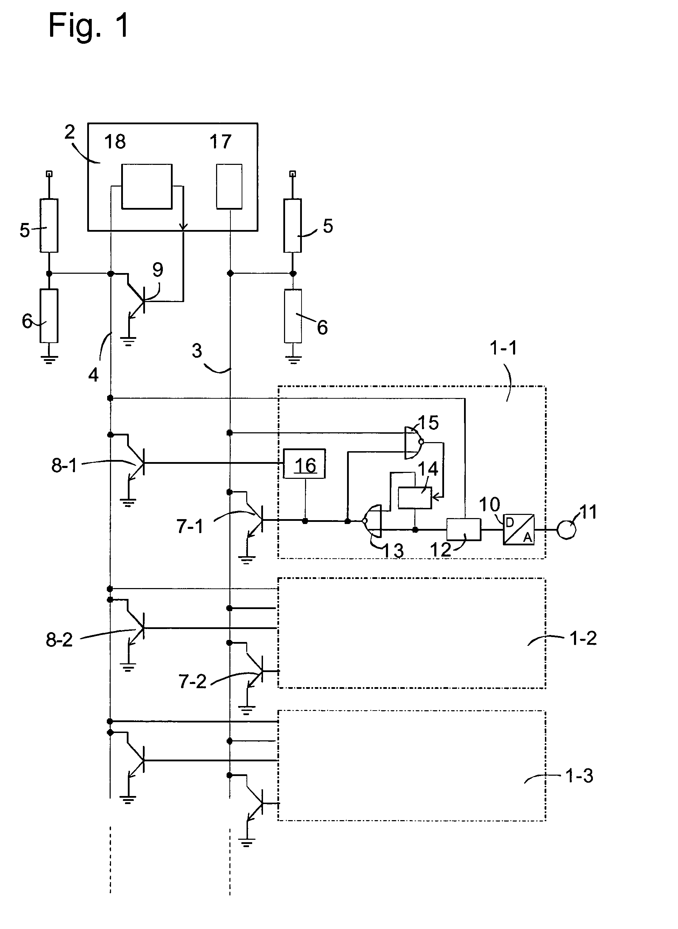

Das Blockdiagramm der Figur 1 zeigt eine erste Ausgestaltung der erfindungsgemäßen Erfassungsvorrichtung mit einer Mehrzahl von Messstellen 1-1, 1-2, ... und einer Steuereinheit 2, die parallel an einer Datenleitung 3 und einer Taktleitung 4 liegen. Die Datenleitung 3 und die Taktleitung 4 sind jeweils über aus Widerständen 5, 6 bestehende Spannungsteiler mit einem passiven, dem Bitwert 1 entsprechenden Pegel vorgespannt und über Transistoren 7-1, 7-2, ..., 8-1, 8-2, ..., 9 mit Masse verbindbar. So lange alle Transistoren an einer der Leitungen undurchlässig sind, liegt die Leitung auf dem hohen, passiven Pegel; sobald einer der Transistoren an der betreffenden Leitung durchlässig ist, fällt das Potential auf Masse, den "aktiven Pegel", entsprechend dem Bitwert 0, ab.

Die Messstellen 1-1, 1-2, ... haben alle den gleichen, in Fig. 1 exemplarisch für die Messstelle 1-1 gezeigten Aufbau. Ein Analog-Digital-Wandler 10 ist mit einem externen Sensor 11 verbunden, um Messwerte von diesem zu empfangen. Der Ausgang des A-D-Wandlers 10 ist mit einem Schieberegister 12 zum Speichern eines digitalisierten Messwerts verbunden. Ein Takteingang des Schieberegisters 12 ist mit der Taktleitung 4 verbunden, so dass das Schieberegister 12 in jeder Periode des auf der Taktleitung 4 anliegenden Taktsignals ein Bit ausgibt. Die Ausgabe der Bits erfolgt dabei in der Reihenfolge abnehmender Signifikanz.

An den Ausgang des Schieberegisters 12 ist ein erster Eingang eines NOR-Gatters 13 angeschlossen, dessen Ausgang den der Messstelle 1-1 zugeordneten Transistor 7-1 an der Datenleitung 3 und den Dateneingang eines RS-Flipflops 14 ansteuert. An den Ausgang des NOR-Gatters 13 ist ferner eine Verzögerungsschaltung 16 angeschlossen, die, jeweils durch eine Pegeländerung am Ausgang des Gatters 13 getriggert, einen Impuls an den zugeordneten Transistor 8-1 an der Taktleitung 4 liefert, der diesen zeitweilig durchlässig macht.

Der Ausgang des RS-Flipflops ist an einen zweiten Eingang des NOR-Gatters 13 sowie an einen ersten Eingang eines NOR-Gatters 15 angeschlossen, dessen zweiter Eingang an die Datenleitung 3 angeschlossen ist. Der Ausgang des NOR-Gatters 15 steuert einen Triggereingang des RS-Flipflops 14 an.

Die Steuereinheit 2 umfasst u. a. ein mit der Datenleitung 3 verbundenes Schieberegister 17 und ein Monoflop 18, welches den Transistor 9 ansteuert.

Die Erfassung des Minimums eines Satzes von von den Messstellen 1-1, 1-2, ... erfassten Messwerten läuft folgendermaßen ab. Zunächst liefert das Monoflop 18 einen Impuls mit einer Zeitdauer t₁ an den Transistor 9, der daraufhin für eine entsprechende Zeitspanne die Taktleitung 4 auf Masse zieht. Durch die abfallende Flanke des Taktsignals wird das Schieberegister 12 jeder Messstelle getriggert, das signifikanteste Bit des darin gespeicherten Messwertes auszugeben. Zu diesem Zeitpunkt enthält in jeder Messstelle das Flipflop 14 den Wert 0, so dass der vom NOR-Gatter 13 ausgegebene Wert die Negation des vom Schieberegister 12 ausgegebenen Bits ist. D. h., wenn das vom Schieberegister 12 ausgegebene Bit in allen Messstellen den Wert 1 hat, legt das NOR-Gatter 13 jeweils niedrigen Pegel an den entsprechenden Transistor 7-1, ... an, so dass die Transistoren 7-1, ... undurchlässig sind und die Datenleitung 3 den passiven Pegel 1 führt. Wenn jedoch das Schieberegister 12 einer Messstelle 1-i ein Bit 0 ausgibt, so legt das betreffende NOR-Gatter hohen Pegel an den entsprechenden Transistor 7-i an, wodurch dieser durchlässig wird und die Datenleitung 3 auf Masse, d.h. auf 0-Pegel, zieht.

Der 0-Pegel auf der Datenleitung 3 erreicht einen Eingang des NOR-Gatters 15 jeder Messstelle. In denjenigen Messstellen, in denen das Flipflop 14 den Wert 0 enthält, kippt dadurch der Ausgang des NOR-Gatters 15 von 0 auf 1, und das Flipflop 14 wird getriggert, den an seinem Eingang anliegenden Wert zu übernehmen. Wenn dieser Wert 0 ist, ändert sich der Zustand des Flipflops 14 nicht. Wenn aber in einer Messstelle 1-j das vom Schieberegister 12 ausgegebene Bit 1 ist, so steht fest, dass der Messwert dieser Messstelle 1-j nicht das Minimum sein kann. In diesem Fall wird der Wert 1 im Flipflop 14 gespeichert.

Wenn an einer der Messstellen 1-k sich der Ausgangspegel des Inverters 18 geändert hat, so ist dadurch noch vor Ablauf der Zeitpanne t₁ auch die Verzögerungsschaltung 16 getriggert worden, die den Transistor 8-k so lange geöffnet hält, wie für eine eventuelle Stabilisierung des Potentials auf der Datenleitung 3 erforderlich. Jede Messstelle kann auf diese Weise bei Bedarf die Dauer einer Taktperiode auf der Taktleitung 4 verlängern.

Der anschließende Wiederanstieg des Potentials auf der Taktleitung 4 triggert das Monoflop 18 der Steuereinheit 2, das kurze Zeit darauf einen zweiten Puls der Dauer t₁ an den Transistor 9 ausgibt. Hierdurch werden wiederum die Schieberegister 12 der Messstellen getriggert, das gespeicherte Bit mit der nächstgeringeren Signifikanz auszugeben. Bei denjenigen Messstellen, deren Flipflop 14 nach wie vor den Wert 0 enthält, wiederholt sich der oben beschriebene Vorgang. Bei denjenigen Messstellen 1-k, bei denen das Flipflop 14 den Wert 1 angenommen hat, bei denen also feststeht, dass ihr Messwert nicht das Minimum sein kann, liefert das NOR-Gatter 13 den Ausgangswert 0 unabhängig vom Wert des vom Schieberegister 12 ausgegebenen Bits. Der infolgedessen mit 0 angesteuerte Transistor 7-k bleibt undurchlässig, so dass die betreffende Messstelle 1-k die Datenleitung 3 nicht beeinflusst.

Ergebnis der beschriebenen Arbeitsweise der einzelnen Messstellen ist, dass auf der Datenleitung 3 nacheinander die Bits des kleinsten unter allen erfassten Messwerten erscheinen und in das Schieberegister 17 der Steuereinheit 2 zur Weiterverarbeitung übernommen werden.

Vor einer neuerlichen Minimumermittlung werden die Flipflops 14 auf 0 zurückgesetzt.

Die Ermittlung eines Maximums aller erfassten Messwerte ist z. B. möglich, indem bei der Vorrichtung der Figur 1 jeweils ein Inverter zwischen dem A-D-Wandler 8 und dem Scheiberegister 12 und zwischen der Datenleitung 3 und dem Schieberegister 17 eingefügt wird.

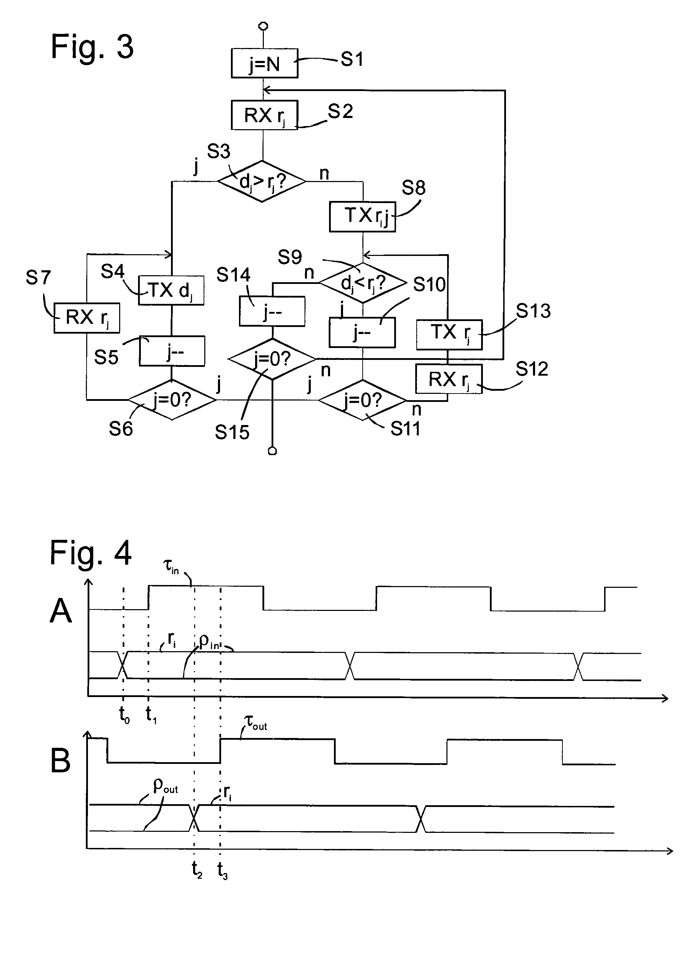

Das Blockdiagramm der Fig. 2 zeigt einen Stapel von M in Reihe geschalteten Brennstoffzellen 19-1 bis 19-M, denen jeweils eine Messstelle 1-i einer zweiten Ausgestaltung der erfindungsgemäßen Erfassungsvorrichtung, bestehend aus einem AD-Wandler 10 und einer Schnittstelle 20-i, i=1, ..., M, zugeordnet ist. Der AD-Wandler 10 ist jeweils mit den Anschlussklemmen der zugeordneten Brennstoffzelle 19-i verbunden, um deren Klemmenspannung zu erfassen und einen für die erfasste Spannung repräsentativen digitalen Wert an die Schnittstellenschaltung 20-i zu liefern. Eine einadrige Datenleitung 3 verläuft ringförmig ausgehend von einer Steuereinheit 2 der Reihe nach über die Schnittstellen 20-i und zurück zu der Steuereinheit 2. Die Datenleitung 3 setzt sich zusammen aus einer Mehrzahl von voneinander signaltechnisch getrennten Abschnitten, d. h. von Abschnitten, die jeweils einen Sender der Steuereinheit 2 mit einem Empfänger der ersten Schnittstelle 20-1 des Kreises oder einen Sender einer Schnittstelle 20-i mit einem Empfänger darauffolgenden Schnittstelle 20-(i+1) bzw. im Falle der letzten Schnittstelle 20-M, mit einem Empfänger der Steuereinheit 2 verbinden. Die Datenleitung 3 überträgt also nur in einer Richtung, im Gegenuhrzeigersinn in Fig. 2, und jede Schnittstelle hat die Kontrolle darüber, ob sie ein an ihrem Empfänger eintreffendes Signal über ihren Sender weitergibt.

Bei der Ausgestaltung der Fig. 2 verbinden die meisten Abschnitte der Datenleitung 3 jeweils Schnittstellen 20 von Brennstoffzellen 19 miteinander, die in der Reihenschaltung der Brennstoffzellen übernächste Nachbarn sind. Die Schnittstellen liegen jeweils schwebend auf dem Potential der ihnen zugeordneten Brennstoffzelle. Somit entspricht die von jedem Abschnitt der Datenleitung 3 zu überbrückende Potentialdifferenz zwischen den Schnittstellen jeweils der zweifachen Klemmenspannung der Brennstoffzellen 19. Da somit die Potentialdifferenz zwischen entlang der Datenleitung 4 benachbarten Schnittstellen 20-i, 20-(i+1) gering ist, ist eine Gleichspannungsentkopplung zwischen ihnen auf einfache Weise, zum Beispiel mit Hilfe eines (nicht dargestellten) in jeden Abschnitt der Datenleitung 3 eingefügten Kondensators, möglich. Selbstverständlich wäre es auch möglich, auf der Datenleitung 3 jeweils die Schnittstellen von in dem Brennstoffzellenstapel elektrisch unmittelbar miteinander verbundenen Brennstoffzellen zu verbinden, in diesem Falle wäre allerdings in einem Abschnitt der Datenleitung 3 eine der Gesamtausgangsspannung des Brennstoffzellenstapels entsprechende Potentialdifferenz zu überbrücken, was aufwändigere Mittel zur Gleichspannungsentkopplung wie etwa einen Optokoppler erforderlich machen kann.

Eine Taktleitung 4 ist parallel zu der Datenleitung 3 ringförmig von der Steuereinheit 2 über die Schnittstellen 20-1 bis 20-M und zurück zu der Steuereinheit 2 geführt. Wie die Datenleitung 3 besteht sie aus einer Mehrzahl von signaltechnisch getrennten Abschnitten, die jeweils einen Sender der Steuereinheit 2 oder einer Schnittstelle 20-i mit einem Empfänger einer darauffolgenden Schnittstelle 20-(i+1) oder der Steuereinheit 2 verbinden.

Die Schnittstellen 20-i sind ausgelegt, um von der Steuereinheit 2 über die Datenleitung 3 gesendete Befehle von Daten zu unterscheiden und auszuwerten. Dies ist z. B. möglich, indem Daten auf der Datenleitung 3 in Form von voneinander zeitlich beabstandeten Zügen oder Salven übertragen werden und die Schnittstellen jeweils eine festgelegte Zahl von Bits am Anfang jedes Zuges als Befehl interpretieren.

Die Steuereinheit 2 ist ihrerseits an einen CAN-Bus 22 eines Kraftfahrzeuges angeschlossen, über den sie von einem nicht dargestellten Prozessor Befehle zum Liefern bestimmter Datenwerte an den Prozessor empfängt bzw. diese Datenwerte sendet.

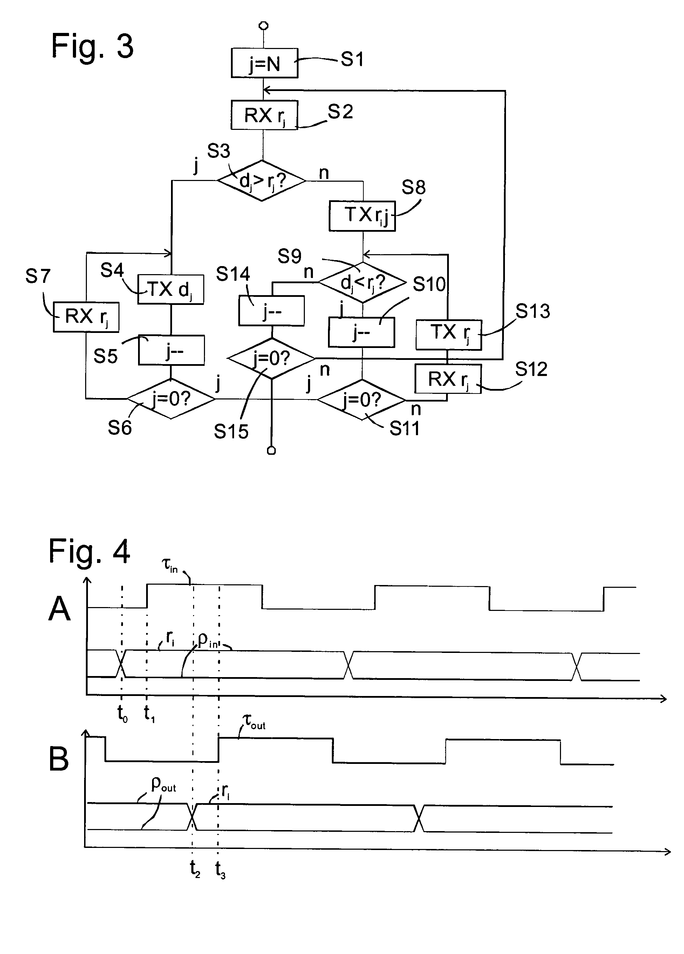

Die Arbeitsweise der in Fig. 2 gezeigten Vorrichtung soll nun anhand eines Beispiels erläutert werden. Es wird der Fall betrachtet, dass die Steuereinheit 2 vom Prozessor den Befehl empfängt, das Maximum aller zu einem festgelegten Zeitpunkt an den Anschlussklemmen der Brennstoffzellen 19 anliegenden Spannungen zu liefern. Daraufhin sendet die Steuereinheit 2 zunächst einen Befehl zum Abtasten und Halten der Klemmenspannung wie oben beschrieben als Teil eines Bitzuges auf der Datenleitung 4 an alle Schnittstellen 20-i. Anschließend beginnt die Steuereinheit 2, synchron zu einem Taktsignal, das sie gleichzeitig über die Taktleitung 4 an die erste Schnittstelle 20-1 sendet, Bit für Bit ein N Bit breites Datenwort zu senden, dessen Bits sämtlich Null sind, wobei N die Auflösung der AD-Wandler 2 ist. Dieses Datenwort kann in dem gleichen Bitzug wie der Befehl oder in einem darauf folgenden gesendet werden. Es ist nicht erforderlich, dass die Steuereinheit 2 abwartet, bis die Digitalisierung der aufgenommenen Datenwerte beendet ist, bevor sie das erste der N Bits "Null" sendet. Es genügt, dass zu Beginn des Sendens das höchstwertige Bit des abgetasteten Datenwertes an der Schnittstelle 20-1 vorliegt, und dass die AD-Wandler 10 die weiteren Bits mit wenigstens derselben Rate liefern, mit der die Steuereinheit 2 sendet. Die Verarbeitung, die die Schnittstellen 20-i durchführen, wenn sie von einer vorgeschalteten Schnittstelle 20-(i-1) oder im Fall der Schnittstelle 20-1 von der Steuereinheit 2 einen Datenwert empfangen, ist für alle Schnittstellen die gleiche und wird mit Bezug auf Fig. 3 beschrieben.

Zu Beginn wird in Schritt S1 ein internes Register j der Schnittstelle 20-i mit dem Wert N belegt. Das daraufhin auf der Datenleitung empfangene Bit rⱼ (Schritt S2) wird mit dem gleich signifikanten Bit dⱼ des vom AD-Wandler 10 erfassten Datenwortes D verglichen (S3). Wenn dⱼ > rⱼ ist, so bedeutet dies, egal, welche Werte die noch zu übertragenden Bits von R haben, dass der von dem AD-Wandler 10 erfasste Datenwert D größer als R sein muss. In diesem Fall geht das Verfahren über zu Schritt S4, sendet das Bit dⱼ an die nachfolgende Schnittstelle 3-(i+1) und dekrementiert in Schritt S5 den Zähler j. Wenn dieser den Wert Null erreicht hat (S6), so bedeutet dies, dass alle N Bits verarbeitet worden sind, und das Verfahren endet. Anderenfalls wird ein weiteres Bit rⱼ empfangen (S7), und das Verfahren kehrt zu Schritt S4 zurück, wo dieses Bit weitergesendet wird.

Wenn der Vergleich von Schritt S3 ergibt, dass dⱼ nicht größer als rⱼ ist, wird in Schritt S8 das Bit rⱼ weitergesendet. Es folgt ein Vergleich (S9), ob dⱼ kleiner als rⱼ ist. Wenn dies der Fall ist, steht automatisch fest, dass - ungeachtet der Werte eventuell noch folgender, weniger signifikanter Bits von R oder D - der Datenwert R größer als D sein muss, so dass die Schnittstelle 20-i in eine Schleife eintritt, in der ohne einen weiteren Größenvergleich so oft j dekrementiert wird (S10), ein weiteres Bit rⱼ empfangen (S12) und weitergesendet (S13) wird, bis j=0 ist (S11).

Wenn der Vergleich in Schritt S9 ergibt, dass dⱼ nicht kleiner als rⱼ ist, so ist noch offen, welcher der Werte R und D der größere ist. Nach Dekrementieren von j (S14) und Vergleichen, ob j=0 ist, kehrt das Verfahren daher zu Schritt S2 zurück.

Der von der Schnittstellenschaltung 20-i weitergebene Datenwert R ist also der jeweils größere unter dem von ihr empfangenen Datenwert R und dem von ihr selbst aufgenommenen Einzeldatenwert D.

Wenn alle Schnittstellen die Verarbeitung gemäß Fig. 3 durchgeführt haben, empfängt schließlich die Steuereinheit 2 als Erfassungsergebnis das Maximum aller von den Messstellen 1 aufgenommenen Einzeldatenwerte.

Eine Erfassung des Minimums aller von den Messstellen aufgenommenen Datenwerte ist in analoger Weise möglich, wenn der von der Steuereinheit 2 an die erste Schnittstelle 20-1 gesendete neutrale Datenwert aus N Bits "1" besteht und die Vergleiche der Schritte S3 und S9 vertauscht werden.

Bei einer vorteilhaften Weiterentwicklung des Verfahrens wird kein Zähler j verwendet; es entfallen der Initialisierungsschritt S1 und die Dekrementierungen S5, S10, S14. Stattdessen wird der Inhalt eines Schieberegisters, in dem zu Beginn des Verfahrens der erfasste Einzeldatenwert D gespeichert ist, und der das jeweils signifikanteste gespeicherte Bit ausgibt, jeweils in den Schritten S5, S10, S14 um ein Bit nach links verschoben, wodurch ebenfalls erreicht wird, dass die Bits von D sukzessive ausgegeben und mit den jeweils gleich signifikanten Bits von R verglichen werden, bis feststeht, welcher Wert der größere (oder kleinere) von beiden ist, und der jeweils ausgewählte Wert als neuer Wert R an die nächste Schnittstellenschaltung weitergegeben wird. Als Abbruchkriterium in den Schritten S6, S11 und S15 wird die Zeitspanne zwischen sukzessive an der Schnittstelle 3 eintreffenden Bits des Werts R angewendet: Bleibt ein Folgebit länger als eine vorgegebene Zeitspanne aus, so beendet die Schnittstelle das Verfahren. Dieses Verfahren ermöglicht unter anderem einen schnellen Vergleich mit eingeschränkter Genauigkeit: die Zahl der Bits von R kann kleiner als die Auflösung der AD-Wandler 10 sein; in einem solchen Fall bleiben wenig signifikante Bits der Datenwerte D unausgewertet.

Fig. 4 zeigt den zeitlichen Verlauf von Takt- und Datensignalen am Eingang (Diagramm A) bzw. am Ausgang (Diagramm B) einer Schnittstelle 20-i. Zum Zeitpunkt t₀, jeweils beim Übergang von einem Bit des zu übertragenden Datenwertes R zum nächsten, kann das Datensignal, in Fig. 4 mit ρᵢₙ bezeichnet, seinen Pegel wechseln. Mit einer kurzen Verzögerung, die zum Stabilisieren der Pegel auf der Datenleitung erforderlich ist, zum Zeitpunkt t₁, hat das Taktsignal τᵢₙ eine ansteigende Flanke, welche die Schnittstelle 20-i veranlasst, den am Eingang anliegenden Wert rⱼ zu übernehmen. Die Schnittstelle 20-i führt die Verknüpfung zwischen dem empfangenen Bit rⱼ und dem entsprechenden Bit dⱼ des von ihr gewonnenen Einzeldatenwertes D aus, wie oben mit Bezug auf Fig. 3 beschrieben. Das Ergebnis liegt zum Zeitpunkt t₂ vor und wird als Pegel rⱼ des Ausgangs-Datensignals ρₒᵤₜ ausgegeben, wie im Diagramm B gezeigt.

Die Schnittstelle 20-i erzeugt ein an eine nachgeordnete Schnittstelle 20-(i+1) weitergegebenes Taktsignal τₒᵤₜ mit einem Phasenversatz von einer halben Periode gegenüber dem empfangenen Taktsignal τᵢₙ. Wenn zum Zeitpunkt t₃ das Taktsignal τᵢₙ wieder abfällt und τₒᵤₜ eine ansteigende Flanke hat, veranlasst dies die nachgeordnete Schnittstelle 20-(i+1), den von der Schnittstelle 20-i ausgegebenen Pegel rⱼ zu übernehmen und zu verarbeiten. Dadurch beträgt die Zahl der Taktperioden, die ein Bit des Datenwerts D braucht, um die Reihenschaltung der Schnittstellen 20-1 bis 20-M zu durchlaufen, nur M/2, während bei einen synchron an allen Schnittstellen anliegenden Taktsignal M Perioden erforderlich wären.

## Patentansprüche

1. Verfahren zum Erfassen des Maximums unter an einer Mehrzahl von Messstellen (1) erfassten Messwerten, bei dem wenigstens eine der durch eine Datenleitung (3) verbundenen Messstellen (1) einen Datenwert (R) auf der Datenleitung (3) seriell empfängt, mit dem eigenen Messwert (D) vergleicht und den eigenen Messwert (D) nur dann auf der Datenleitung (3) seriell sendet, wenn er nicht kleiner als der Datenwert (R) ist,
**dadurch gekennzeichnet,**
**dass** die Messstelle (1) die Bits des Datenwerts (R) in der Reihenfolge abnehmender Signifikanz empfängt, die empfangenen Bits (rⱼ) des Datenwerts (R) mit den gleich signifikanten Bits (dⱼ) des eigenen Messwerts (D) wenigstens so lange vergleicht und jedes als größer als das entsprechende empfangene Bit erkannte Bit des eigenen Messwerts sendet, bis ein Vergleich ergibt, dass das Bit des eigenen Messwerts kleiner als das des empfangenen Datenwerts ist, und dann das Senden des eigenen Datenwerts einstellt.

2. Verfahren zum Erfassen des Minimums unter an einer Mehrzahl von Messstellen erfassten Messwerten, bei dem wenigstens eine der durch eine Datenleitung (3) verbundenen Messstellen (1) einen Datenwert (R) auf der Datenleitung seriell empfängt, mit dem eigenen Messwert (D) vergleicht und den eigenen Messwert (D) nur dann auf der Datenleitung (3) seriell sendet, wenn er nicht größer als der Datenwert (R) ist,
**dadurch gekennzeichnet,**
**dass** die Messstelle (1) die Bits des Datenwerts (R)in der Reihenfolge abnehmender Signifikanz empfängt, die empfangenen Bits (rⱼ) des Datenwerts mit den gleich signifikanten Bits (dⱼ) des eigenen Messwerts (D) wenigstens so lange vergleicht und jedes als kleiner als das entsprechende empfangene Bit erkannte Bit des eigenen Messwerts sendet, bis ein Vergleich ergibt, dass das Bit des eigenen Messwerts größer als das des empfangenen Datenwerts ist, und dann das Senden des eigenen Datenwerts einstellt.

3. Verfahren nach Anspruch 1 oder 2
**dadurch gekennzeichnet,**
**dass** jede Messstelle (1) von jeder anderen Messstelle (1) empfängt und an jede andere Messstelle (1) sendet.

4. Verfahren nach Anspruch 1 oder 2,
**dadurch gekennzeichnet,**
**dass** jede Messstelle (1-i) von genau einem Vorgänger (1-(i-1)) empfängt und an genau einen Nachfolger (1-(i+1)) sendet.

5. Verfahren nach Anspruch 4
**dadurch gekennzeichnet,**
**dass** jede Messstelle (1-i), wenn sie das Senden des eigenen Datenwerts einstellt, anstelle der noch nicht gesendeten Bits des eigenen Messwerts die entsprechenden Bits des empfangenen Datenwerts sendet.

6. Vorrichtung zum Erfassen des Maximums unter einer Mehrzahl von Messwerten, mit einer Mehrzahl von Messstellen (1) zum Erfassen der Messwerte und einer Datenleitung (3) zum Übertragen von Datenwerten (R) zwischen den Messstellen (1), wobei wenigstens eine der Messstellen über einen Komparator (13-15) zum Vergleichen eines auf der Datenleitung empfangenen Datenwerts mit dem eigenen Messwert verfügt und ausgelegt ist, den eigenen Messwert nur dann auf der Datenleitung zu senden, wenn er nicht kleiner als der Datenwert ist,
**dadurch gekennzeichnet,**
**dass** die Datenleitung (3) eine serielle Leitung zur Übertragung des Datenwerts (R) in Form von aufeinanderfolgenden Bits (rⱼ) abnehmender Signifikanz ist, dass der Komparator (13-15) ein serieller Komparator ist, der die empfangenen Bits des Datenwerts mit den gleich signifikanten Bits (dⱼ) des eigenen Messwerts (D) vergleicht, und dass die Messstelle (1) ausgelegt ist, jedes als größer als das entsprechende empfangene Bit erkannte Bit des eigenen Messwerts zu senden, bis ein Vergleich ergibt, dass das Bit des eigenen Messwerts kleiner als das des empfangenen Datenwerts ist, und dann das Senden des eigenen Datenwerts einzustellen.

7. Vorrichtung zum Erfassen des Minimums unter einer Mehrzahl von Messwerten, mit einer Mehrzahl von Messstellen (1) zum Erfassen der Messwerte und einer Datenleitung (3) zum Übertragen von Datenwerten zwischen den Messstellen (1) , wobei wenigstens eine der Messstellen (1) über einen Komparator (13-15) zum Vergleichen eines auf der Datenleitung empfangenen Datenwerts (R) mit dem eigenen Messwert (D) verfügt und ausgelegt ist, den eigenen Messwert nur dann auf der Datenleitung zu senden, wenn er nicht größer als der Datenwert ist,
**dadurch gekennzeichnet,**
**dass** die Datenleitung (3) eine serielle Leitung zur Übertragung des Datenwerts (R) in Form von aufeinanderfolgenden Bits (rⱼ) abnehmender Signifikanz ist, dass der Komparator (13-15) ein serieller Komparator ist, der die empfangenen Bits (rⱼ) des Datenwerts (R) mit den gleich signifikanten Bits (dⱼ) des eigenen Messwerts (D) vergleicht, und dass die Messstelle (1) ausgelegt ist, jedes als kleiner als das entsprechende empfangene Bit erkannte Bit des eigenen Messwerts zu senden, bis ein Vergleich ergibt, dass das Bit des eigenen Messwerts größer als das des empfangenen Datenwerts ist, und dann das Senden des eigenen Datenwerts einzustellen.

8. Vorrichtung nach Anspruch 6 oder 7,
**dadurch gekennzeichnet,**
**dass** die Datenleitung (3) jede Messstelle (1) mit jeder anderen Messstelle (1) verbindet.

9. Vorrichtung nach Anspruch 6 und Anspruch 8,
**dadurch gekennzeichnet,**
**dass** die Datenleitung (3) einen passiven Pegel, der sich einstellt, wenn alle Messstellen (1) einen passiven Bitwert senden, und einen aktiven Pegel aufweist, der sich einstellt, wenn auch nur eine der Messstellen (1) einen aktiven Bitwert sendet, und dass der passive Pegel einem Bit mit Wert "0" und der aktive Pegel einem Bit mit Wert "1" entspricht.

10. Vorrichtung nach Anspruch 7 und Anspruch 8,
**dadurch gekennzeichnet,**
**dass** die Datenleitung (1) einen passiven Pegel, der sich einstellt, wenn alle Messstellen einen passiven Bitwert senden, und einen aktiven Pegel aufweist, der sich einstellt, wenn auch nur eine der Messstellen einen aktiven Bitwert sendet, und dass der passive Pegel einem Bit mit Wert "1" und der aktive Pegel einem Bit mit Wert "0" entspricht.

11. Vorrichtung nach Anspruch 6 oder 7,
**dadurch gekennzeichnet,**
**dass** die Datenleitung (3) eine Mehrzahl von Abschnitten umfasst, die jeweils eine Messstelle (1) mit einem Vorgänger oder mit einem Nachfolger verbinden.

12. Vorrichtung nach einem der Ansprüche 6 bis 11,
**dadurch gekennzeichnet,**
**dass** die Messstellen (1) durch eine Taktleitung (4) verbunden sind.

13. Vorrichtung nach einem der Ansprüche 8 bis 10 und Anspruch 12, **dadurch gekennzeichnet, dass** die Taktleitung (4) einen aktiven und einen passiven Pegel aufweist, und dass jede Messstelle (1) eingerichtet ist, von der Ausgabe eines aktiven Pegels auf der Taktleitung (4) zur Ausgabe eines passiven Pegels umzuschalten, wenn ein von der Messstelle (1) auf der Datenleitung (3) zu sendendes Bit stabilisiert ist.

14. Vorrichtung nach Anspruch 11 und Anspruch 13,
**dadurch gekennzeichnet,**
**dass** die Taktleitung (4) eine Mehrzahl von Abschnitten umfasst, die jeweils eine Messstelle (1) mit einem Vorgänger oder mit einem Nachfolger verbinden, wobei jede Messstelle (1) ein auf einem ersten Abschnitt vom Vorgänger empfangenes Taktsignal mit einer Verzögerung (t₂-t₀) von einer halben Taktperiode auf einem zweiten Abschnitt an den Nachfolger weitergibt.
